# EUROPÄISCHE PATENTSCHRIFT

(11) **EP 3 971 535 B1**
(45) Veröffentlichungstag und Bekanntmachung des Hinweises auf die Patenterteilung: **26.08.2026**
(21) Anmeldenummer: 21194067.1
(22) Anmeldetag: 31.08.2021
(51) Int. Cl.: G01F 1/66, H04R 17/00, G01F 25/10, G01F 1/667, G01F 15/14

(54) **ULTRASCHALLWANDLER, ULTRASCHALLDURCHFLUSSMESSGERÄT UND VERFAHREN**
ULTRASONIC TRANSDUCER, ULTRASONIC FLOWMETER AND METHOD
CONVERTISSEUR À ULTRASONS, DÉBITMÈTRE À ULTRASONS ET PROCÉDÉ

(30) Priorität: 16.09.2020 DE 102020124121
(43) Veröffentlichungstag der Anmeldung: 23.03.2022
(73) Patentinhaber: Krohne Messtechnik GmbH, 47058 Duisburg (DE)
(72) Erfinder: BEERENS, Anton, 5176 NG De Moer (NL); GEVERS, Martin, 58456 Witten (DE); ORSOE, Lars, 3400 Hillerød (DK); VOGT, Michael, 44797 Bochum (DE)
(74) Vertreter: Gesthuysen Patentanwälte

(56) Entgegenhaltungen:
- DE-A1- 102007 062 913
- US-A- 5 117 698
- US-A1- 2015 260 556
- US-A1- 2017 307 426

## Beschreibung

Die Erfindung betrifft einen Ultraschallwandler für ein Ultraschalldurchflussmessgerät, mit einem Wandlergehäuse und mit einem Wandlerelement, wobei das Wandlergehäuse ein Ultraschallfenster aufweist und wobei das Wandlerelement im Wandlergehäuse angeordnet ist und zum Senden von Ultraschallsignalen auf einen Signalpfad und zum Empfangen von Ultraschallsignalen von dem Signalpfad ausgebildet ist, und mit einer Steuer- und Auswerteeinheit zum Ansteuern des Wandlerelements und Auswerten der Ultraschallsignale. Des Weiteren betrifft die Erfindung ein Ultraschalldurchflussmessgerät, und ein Verfahren zum Betreiben eines Ultraschalldurchflussmessgerätes.

Ultraschalldurchflussmessgeräte sind in einer Vielzahl aus dem Stand der Technik bekannt und werden zur Bestimmung des Durchflusses eines strömenden Mediums durch ein Messrohr verwendet. Ultraschalldurchflussmessgeräte weisen hierzu in der Regel wenigstens zwei Ultraschallwandler auf, die als Ultraschallsender und/oder Ultraschallempfänger ausgebildet und in Strömungsrichtung gesehen voneinander beabstandet angeordnet sind (axial bezogen auf die Messrohrachse). Um den Durchfluss zu bestimmen, wird ein Ultraschallsignal entlang eines Signalpfades zwischen den Ultraschallwandlern einmal in Strömungsrichtung des Mediums und einmal entgegen der Strömungsrichtung des Mediums ausgesendet und die Laufzeit des Ultraschallsignals bzw. der Ultraschallsignale bestimmt, die sich aufgrund des Mittführeffekts des Mediums voneinander unterscheiden. Aus dem Laufzeitunterschied lässt sich die Strömungsgeschwindigkeit des Mediums bestimmen und aus der Strömungsgeschwindigkeit und dem Messrohrquerschnitt ergibt sich der Volumendurchfluss des Mediums.

Die Ultraschallsignale werden von einem Wandlerelement, das sich im Wandlergehäuse der Ultraschallwandler befindet, erzeugt und empfangen. In der Praxis werden die Wandlerelemente meist durch elektromechanische Wandlerelemente realisiert, deren Wirkprinzip auf dem piezoelektrischen Effekt beruht. Die Ultraschallsignale werden dann über das Ultraschallfenster des Wandlergehäuses in das Messrohr ausgesendet bzw. über das Ultraschallfenster des Wandlergehäuses empfangen.

Ultraschall kann in Flüssigkeiten gut übertragen werden, Flüssigkeiten weisen eine geringe Dämpfung für Ultraschall aus. In Luft hingegen werden die Ultraschallsignale stark gedämpft. Befindet sich kein Medium im Messrohr, wir die Übertragung des Ultraschalls von einem Ultraschallwandler zum anderen Ultraschallwandler äußerst stark gedämpft, sodass kein oder nahezu kein Ultraschallsignal empfangen werden kann. Der Fall des leeren Messrohres ist in der Praxis jedoch nicht ohne Weiteres zu unterscheiden von dem Fall eines defekten Wandlerelements. In beiden Fällen empfängt der empfangende Ultraschallwandler kein oder nur ein sehr geringes Ultraschallsignal.

Aus der DE 10 2007 062 913 A1 ist ein Ultraschallwandler bekannt, der neben einem Wandlerelement auch ein Pufferelement aufweist. Das Pufferelement dient dazu, von dem Wandlerelement erzeugte Ultraschallwellen durch das Pufferelement zur Messrohrwandung oder in das Medium zu führen. Zudem erfährt das von dem Wandlerelement ausgesandte Ultraschallsignal eine Reflexion an einer Grenzschicht des Pufferelements. Das reflektierte Ultraschallsignal wird wieder von dem Wandlerelement empfangen und wird für eine Selbstanalyse des Ultraschallwandlers herangezogen. Nachteilig an den aus dem Stand der Technik bekannten Ultraschallwandlern und Ultraschalldurchflussmessgeräten ist, dass nicht ohne Weiteres unterschieden werden kann, ob ein Leerrohrfall oder ein Fehlerzustand des Ultraschallwandlers vorliegt.

Der Erfindung liegt demnach die Aufgabe zugrunde, einen Ultraschallwandler und ein Ultraschalldurchflussmessgerät bereitzustellen, das eine erhöhte Fehlererkennungsfähigkeit aufweist. Des Weiteren liegt der Erfindung die Aufgabe zugrunde, ein Verfahren zum Betreiben des Ultraschallwandlers und des Ultraschalldurchflussmessgerätes bereitzustellen.

Bei dem in Rede stehenden Ultraschallwandler istin oder an dem Wandlergehäuse ein Pufferelement in dem Signalpfad angeordnet. Das Pufferelement bildet in dem Signalpfad wenigstens eine zumindest teilweise reflektierende Grenzschicht aus. Im Betriehszustand des Ultraschallwandlers sendet das Wandlerelement ein Ultraschallsignal aus, wobei das Ultraschallsignal an der Grenzschicht des Pufferelements zumindest teilweise reflektiert wird. Der reflektierte Signalanteil wird dann wieder von dem Wandlerelement empfangen. Der transmittierte Signalanteil wird über das Ultraschallfenster ausgesendet.

Wenn es heißt, dass das Pufferelement in dem Wandlergehäuse angeordnet ist, dann ist damit gemeint, dass das Pufferelement im Inneren des Wandlergehäuses angeordnet ist. Wenn es heißt, dass das Pufferelement an dem Wandlergehäuse angeordnet ist, dann ist damit gemeint, dass das Pufferelement zumindest mittelbar, was nicht unter den Schutzumfang des Anspruchs fällt, bevorzugt unmittelbar, mit dem Wandlergehäuse verbunden ist.

Nicht gemeint ist, dass das Pufferelement beabstandet von dem Wandlergehäuse und nicht verbunden mit dem Wandlergehäuse außerhalb des Wandlergehäuses angeordnet ist.

Zudemist weiter vorgesehen, dass die Steuer- und Auswerteeinheit derart ausgestaltet ist, dass sie im Betriebszustand des Ultraschallwandlers den Empfang des reflektierten Signalanteils überwacht. Beim Ausbleiben eines reflektierten Signalanteils erkennt die Steuer- und Auswerteeinheit einen einen Fehlerzustand des Ultraschallwandlers.

Durch die Ausgestaltung des Ultraschallwandlers lässt sich auf einfache Art und Weise detektieren, ob das Wandlerelement ein Ultraschallsignal erzeugt und ausgesendet hat. Ist dies nicht der Fall, so wird kein Signalanteil an der Grenzschicht des Pufferelements reflektiert und folglich auch nicht wieder von dem Wandlerelement empfangen. Das Ausbleiben des Empfangens des reflektierten Signalanteils wird von der Steuer- und Auswerteeinheit erkannt. So kann ein Benutzer auf einfache Art und Weise nachvollziehen, ob ein Fehlerzustand des Ultraschallwandlers vorliegt. In einer bevorzugten Ausgestaltung ist die Steuer- und Auswerteeinheit ferner derart ausgestaltet, dass sie einen erkannten Fehlerzustand durch ein Fehlersignal signalisiert. Das Signalisieren kann auf unterschiedliche Art und Weise erfolgen, beispielsweise durch Ausgabe eines optischen oder akustischen Warnsignals. Es kann aber beispielsweise auch ein Fehlercode generiert und ausgegeben werden.

In einer alternativen Ausgestaltung des Ultraschallwandlers ist ebenfalls ein Pufferelement in dem Signalpfad angeordnet und bildet in dem Signalpfad wenigstens eine zumindest teilweise reflektierende Grenzschicht (10) aus. Im Unterschied zu der zuvor beschriebenen Ausgestaltung ist in dem Wandlergehäuse ein zweites Wandlerelement angeordnet. Im Betriebszustand des Ultraschallwandlers sendet das Wandlerelement ein Ultraschallsignal aus, das an der Grenzschicht des Pufferelements zumindest teilweise reflektiert wird. Das zweite Wandlerelement ist derart in dem Wandlergehäuse angeordnet, dass der reflektierte Signalanteil von dem zweiten Wandlerelement empfangen wird. Besonders bevorzugt ist das zweite Wandlerelement nur zum Empfangen von Ultraschallsignalen ausgelegt. Die Steuer- und Auswerteeinheit ist bei der alternativen Ausgestaltung derart ausgestaltet, dass sie im Betriebszustand des Ultraschallwandlers den Empfang des reflektierten Signalanteils überwacht und beim Ausbleiben des Empfangens eines reflektierten Signalanteils einen Fehlerzustand des Ultraschallwandlers erkennt.

Die alternative Ausgestaltung ist insbesondere dann vorteilhaft, wenn das ausgesendete Ultraschallsignal nicht senkrecht auf die teilreflektierende Grenzschicht auftrifft und so unter einem Ausfallswinkel, der dem Einfallswinkel entspricht, reflektiert wird. Diese Situation kommt insbesondere bei Ultraschallwandlern von Clamp-On-Ultraschalldurchflussmessgeräten vor. Clamp-On-Ultraschalldurchflussmessgeräte werden von außen auf das Messrohr, in dem das zu vermessende Medium strömt, aufgeklemmt. Meist weisen solche Durchflussmessgeräte zwei Ultraschallwandler auf. Die Ultraschallwandler, bzw. die Wandlerelemente der Ultraschallwandler, sind dann unter einem schrägen Winkel zu der Messrohroberfläche ausgerichtet, sodass die Ultraschallsignale unter einem schrägen Winkel in das Messrohr ausgesendet werden. Dies wird durch die Geometrie des Pufferelements gewährleistet. Das Pufferelement weist hierzu beispielsweise einen dreieckigen Querschnitt auf.

Das Pufferelement ist bei verschiedenen Ausgestaltungen des erfindungsgemäßen Ultraschallwandlers auf unterschiedliche Arten realisiert.

Bevorzugt wird die Grenzschicht auf der dem Wandlerelement abgewandten Seite des Pufferelements ausgebildet. Das ausgesendete Ultraschallsignal durchläuft dann bevorzugt die gesamte Länge des Pufferelements entlang des Signalpfades, bevor es an der dem Wandlerelement abgewandten Seite des Pufferelements teilreflektiert wird. Der reflektierte Signalanteil durchläuft das Pufferelement erneut entlang des Signalpfades, bevor er wieder von dem Wandlerelement empfangen wird. Durch das Pufferelement kann so ein zeitlicher Abstand zwischen Senden des Ultraschallsignals und Empfangen des teilreflektierten Signalanteils sichergestellt werden.

Erfindungsgemäß ist das Pufferelement durch das Ultraschallfenster gebildet. Das Ultraschallfenster weist eine erhöhte Dicke auf, wobei die Dicke definiert ist als die Erstreckung des Ultraschallfensters entlang des Signalpfades des Ultraschallsignals.

In einer Variante ragt das durch das Ultraschallfenster gebildete Pufferelement in das Wandlergehäuse hinein. In einer alternativen Ausgestaltung ragt das durch das Ultraschallfenster gebildete Pufferelement aus dem Wandlergehäuse hinaus.

Grundsätzlich kann das Ultraschallfenster einstückig mit dem Wandlergehäuse ausgebildet sein, wobei unter einstückig zu verstehen ist, dass Wandlergehäuse und Ultraschallfenster als ein Teil aus einem Werkstück gefertigt sind und nicht miteinander verbunden worden sind. Alternativ kann das Ultraschallfenster als separates, jedoch mit dem Wandlergehäuse unmittelbar verbundenes Bauteil realisiert sein. Insbesondere ist eine mediumdichte Verbindung zwischen Ultraschallfenster und Wandlergehäuse notwendig, um zu vermeiden, dass Medium in das Innere des Wandlergehäuses tritt. Das Ultraschallfenster kann beispielsweise mit dem Wandlergehäuse verschweißt sein.

In einem Beispiel eines Ultraschallwandlers, das nicht unter den Schutzumfang des Anspruchs fällt, ist das Pufferelement als separates Bauteil ausgebildet. Diese Ausgestaltung weist den Vorteil auf, dass das Pufferelement im Bedarfsfall ausgetauscht werden kann.

Besonders bevorzugt ist das Pufferelement zwischen dem Wandlerelement und dem Ultraschallfenster im Inneren des Wandlergehäuses angeordnet. Weiter bevorzugt ist das Wandlerelement unmittelbar angrenzend zu dem Pufferelement angeordnet.

In einer weiteren besonders bevorzugten Ausgestaltung des erfindungsgemäßen Ultraschallwandlers bildet das Pufferelement eine erste Grenzschicht und wenigstens eine zweite Grenzschicht im Signalpfad des Ultraschallsignals aus. Das Ultraschallsignal wird an der ersten Grenzschicht zumindest teilweise reflektiert, wobei der reflektierte Signalanteil von der ersten Grenzschicht auf die zweite Grenzschicht reflektiert wird. Besonders bevorzugt trifft der reflektierte Signalanteil senkrecht auf die zweite Grenzschicht. Der reflektierte Signalanteil wird von der zweiten Grenzschicht zurückreflektiert auf die erste Grenzschicht und von dort zurückreflektiert zu dem Wandlerelement, von dem er wieder empfangen wird.

Eine derartige Ausgestaltung ist insbesondere vorteilhaft, wenn der Ultraschallwandler in einem Clamp-On-Ultraschalldurchflussmessgerät verwendet wird.

Um die Teilreflexion des Ultraschallsignals an der Grenzschicht weiter zu erhöhen, ist in einer ganz besonders bevorzugten Variante des erfindungsgemäßen Ultraschallwandlers vorgesehen, dass auf die durch das Pufferelement gebildete Grenzschicht eine die Teilreflexion verstärkende Beschichtung aufgebracht ist. Eine derartige Ausgestaltung ist insbesondere dann vorteilhaft, wenn ein Medium vermessen werden soll, das ähnliche akustische Eigenschaften wie das Wandlerelement, bzw. wie das Ultraschallfenster des Wandlerelements aufweist, sodass - ohne zusätzliche Beschichtung - keine oder kaum Teilreflexion auftritt.

Ein besonders bevorzugter erfindungsgemäßer Ultraschallwandler zeichnet sich dadurch aus, dass die Steuer- und Auswerteeinheit derart ausgestaltet ist, dass sie im Betriebszustand des Ultraschallwandlers eine den reflektierten Signalanteil beschreibende Größe ermittelt und mit einem Referenzwert für diese Größe vergleicht. Eine derartige Größe ist in einer bevorzugten Variante die Intensität des reflektierten Signalanteils. Der Referenzwert ist derjenige Wert der Größe im Gutzustand des Ultraschallwandlers. Bei einer Abweichung der ermittelten Größe von dem Referenzwert über einen vorgegebenen Toleranzbereich hinaus gibt die Steuer- und Auswerteeinheit ein Fehlersignal aus. Eine derartige Ausgestaltung des Ultraschallwandlers ermöglicht eine erweiterte Fehlerdiagnostik des Ultraschallwandlers. So kann nicht nur durch das Überwachen des teilreflektierten Signalanteils erkannt werden, ob das Wandlerelement des Ultraschallwandlers funktionsfähig ist, vielmehr kann durch die Überwachung der den reflektierten Signalanteil beschreibenden Größe auch erkannt werden, ob das Wandlerelement seine Position in dem Ultraschallwandler verändert hat, beispielsweise dadurch, dass es sich gelöst hat und verrutscht ist, oder ob sonstige Defekte vorliegen, die jedoch nicht zum Totalausfall des Wandlerelements führen. Sämtliche derartige Begebenheiten hätten einen Einfluss auf die den reflektierten Signalanteil beschreibende Größe.

Neben dem Ultraschallwandler betrifft die Erfindung zudem ein Ultraschalldurchflussmessgerät zur Bestimmung des Durchflusses eines strömenden Mediums. Das Ultraschalldurchflussmessgerät weist einen ersten Ultraschallwandler und einen zweiten Ultraschallwandler auf und verfügt zudem über eine Steuer- und Auswerteeinheit. Die Ultraschallwandler sind zum Senden eines Ultraschallsignals auf einen Signalpfad und/oder zum Empfangen eines Ultraschallsignals von dem Signalpfad ausgebildet und stehen über den Signalpfad des Ultraschallsignals in Wirkzusammenhang miteinander.

Wenn es heißt, dass die Ultraschallwandler über den Signalpfad in Wirkzusammenhang miteinander stehen, dann ist damit gemeint, dass wenigstens einer der Ultraschallwandler das von dem anderen Ultraschallwandler über den Signalpfad gesendete Ultraschallsignal empfängt.

Bei dem in Rede stehenden Ultraschalldurchflussmessgerät ist die Aufgabe zunächst und im Wesentlichen dadurch gelöst, dass wenigstens ein zum Senden ausgebildeter Ultraschallwandler ein Pufferelement aufweist, dass das Pufferelement in dem Signalpfad des Ultraschallsignals in oder an dem Wandlergehäuse angeordnet ist und dass das Pufferelement in dem Signalpfad wenigstens eine zumindest teilweise reflektierende Grenzschicht ausbildet. Erfindungsgemäß wird das Pufferelement durch das Ultraschallfenster gebildet. Das Ultraschallfenster weist eine erhöhte Dicke auf, wobei die Dicke definiert ist als die Erstreckung des Ultraschallfensters entlang des Signalpfades des Ultraschallsignals. Das durch das Ultraschallfenster gebildete Pufferelement ragt in das Wandlergehäuse hinein oder ragt aus dem Wandlergehäuse hinaus.

Im Betriebszustand des Ultraschalldurchflussmessgerätes sendet das Wandlerelement des sendenden Ultraschallwandlers ein Ultraschallsignal aus, wobei das Ultraschallsignal an der Grenzschicht des Pufferelements zumindest teilweise reflektiert wird und teilweise transmittiert wird.

In einer ersten Variante des erfindungsgemäßen Ultraschalldurchflussmessgerätes wird der reflektierte Signalanteil von dem Wandlerelement des sendenden Ultraschallwandlers empfangen. In einer alternativen Variante des erfindungsgemäßen Ultraschalldurchflussmessgerätes ist in dem Wandlergehäuse des zum Senden ausgebildeten Ultraschallwandlers ein zweites Wandlerelement angeordnet. Hier wird der reflektierte Signalanteil von dem zweiten Wandlerelement des sendenden Ultraschallwandlers empfangen.

In beiden Varianten wird der transmittierte Signalanteil von dem Wandlerelement des empfangenden Ultraschallwandler empfangen.

Erfindungsgemäß ist ferner bei beiden Varianten vorgesehen, dass die Steuer- und Auswerteeinheit derart ausgestaltet ist, dass sie im Betriebszustand des Ultraschalldurchflussmessgerätes den Empfang des reflektierten Signalanteils und den Empfang des transmittierten Signalanteils überwacht und einen der folgenden Betriebszustände des Ultraschalldurchflussmessgerätes erkennt:
- bei Empfangen des reflektierten Signalanteils und Empfangen des transmittierten Signalanteils: Ultraschalldurchflussmessgerät funktionsfähig,
- bei Empfangen des reflektierten Signalanteils und Ausbleiben des Empfangens des transmittierten Signalanteils: Ultraschalldurchflussmessgerät funktionsfähig, Messrohr leer,
- bei Ausbleiben des Empfangens des reflektierten Signalanteils und Ausbleiben des Empfangens des transmittierten Signalanteils: Ultraschalldurchflussmessgerät im Fehlerzustand, insbesondere sendender Ultraschallwandler im Fehlerzustand, insbesondere Wandlerelement des sendenden Ultraschallwandlers im Fehlerzustand.

Besonders bevorzugt ist die Steuer- und Auswerteeinheit weiter so ausgebildet, dass sie den erkannten Betriebszustand des Ultraschalldurchflussmessgerätes signalisiert. Das Signalisieren kann hierbei beispielsweise durch verschiedene optische oder akustische Signale erfolgen oder auf andere, aus dem Stand der Technik bekannte Art und Weise.

In besonders bevorzugten Ausgestaltungen des erfindungsgemäßen Durchflussmessgerätes sind die Ultraschallwandler mit Merkmalen des zuvor beschriebenen erfindungsgemäßen Ultraschallwandlers ausgestaltet. Entsprechend sind sämtliche in Zusammenhang mit dem erfindungsgemäßen Ultraschallwandler gemachten Ausführungen in Bezug auf bevorzugte Ausführungsformen und ihre Vorteile ebenfalls analog auf das erfindungsgemäße Ultraschalldurchflussmessgerät übertragbar und gelten entsprechend.

In einer besonders bevorzugten Ausgestaltung des Ultraschalldurchflussmessgerätes ist die Steuer- und Auswerteeinheit derart ausgestaltet, dass sie den transmittierten Signalanteil dann als "nicht empfangen" bewertet, wenn der transmittierte Signalanteil unter einem vorgegebenen Grenzwert liegt. Der Grenzwert kann hier beispielsweise ein Intensitätswert oder ein Amplitudenwert sein. Diese Ausgestaltung berücksichtigt, dass eine Ausbreitung des Ultraschallsignals grundsätzlich trotz leerem Messrohr ebenfalls erfolgt, das Ultraschallsignal jedoch sehr stark gedämpft wird. Es ist also denkbar, dass trotz leerem Messrohr ein - wenn auch äußerst geringes - Ultraschallsignal - transmittierter Signalanteil - empfangen werden kann. Liegt der transmittierte Signalanteil jedoch unterhalb des - insbesondere durch einen Benutzer - vorgegebenen Grenzwertes, wird das Messrohr gleichwohl als "leer" erkannt.

Beschrieben wird ebenfalls ein Verfahren zur Funktionsüberwachung eines Ultraschallwandlers. Der Ultraschallwandler weist ein Wandlergehäuse und ein Wandlerelement auf, wobei das Wandlergehäuse ein Ultraschallfenster aufweist und wobei das Wandlerelement im Wandlergehäuse angeordnet ist und zum Senden von Ultraschallsignalen auf einen Signalpfad und zum Empfangen von Ultraschallsignalen von dem Signalpfad ausgebildet ist. Ebenfalls weist der Ultraschallwandler eine Steuer- und Auswerteeinheit zum Ansteuern des Wandlerelements und zum Auswerten der Ultraschallsignale auf. Zudem ist Pufferelement vorgesehen, das in dem Signalpfad der Ultraschallsignale angeordnet ist und in dem Signalpfad wenigstens eine zumindest teilweise reflektierende Grenzschicht zu einer Umgebung des Pufferelements ausbildet.

In einer Variante ist in dem Wandlergehäuse des Ultraschallwandlers ein zweites Wandlerelement angeordnet.

Das beschriebene Verfahren zeichnet sich dadurch aus, dass zunächst in einem Sendeschritt ein Ultraschallsignal ausgesendet wird, wobei das Ultraschallsignal an der Grenzfläche zumindest teilweise reflektiert wird. Das Ultraschallsignal wird von dem Wandlerelement des Ultraschallwandlers ausgesendet. In einem anschließenden Empfangsschritt wird der reflektierte Signalanteil von dem Wandlerelement des Ultraschallwandlers oder einem zweiten in dem Wandlergehäuse angeordneten Wandlerelement empfangen. In einem Überwachungsschritt wird das Empfangen des reflektierten Signalanteils überwacht. Im Falle des Ausbleibens des Empfangens eines reflektierten Signalanteils wird in einem Signalisationsschritt das Ausbleiben erkannt und ein Fehlerzustand signalisiert.

Das beschriebene Verfahren bildet eine sehr einfache Möglichkeit, einen Ultraschallwandler auf seine Funktionsfähigkeit hin zu testen, und zwar, ohne dass separate Testgeräte notwendig sind. Wird ein reflektierter Signalanteil empfangen, so muss er vorher ausgesendet worden sein, das Wandlerelement muss demnach funktionsfähig sein. Bleibt das Empfangen des reflektierten Signalanteils aus, so muss ein Benutzer davon ausgehen, dass kein Ultraschallsignal ausgesendet worden ist und das Wandlerelement in einem Fehlerzustand, beispielsweise defekt, ist.

In einer bevorzugten Ausführungsform des beschriebenen Verfahrens wird in einem Vergleichsschritt eine den reflektierenden Signalanteil beschreibende Größe, insbesondere die Intensität des reflektierten Signalanteils, mit einem Referenzwert verglichen und wird bei einer Abweichung über einen vorgegebenen Toleranzwert hinaus ein Fehlersignal ausgegeben. Durch diesen ergänzenden Verfahrensschritt ist eine umfassendere Funktionsprüfung des Ultraschallwandlers möglich, da nicht nur überwacht wird, ob das Wandlerelement ein Ultraschallsignal aussendet, sondern ebenfalls überwacht wird, ob sich das ausgesendete Ultraschallsignal ändert, beispielsweise dadurch, dass das Wandlerelement seine Position in dem Wandlergehäuse verändert hat.

Das beschriebene Verfahren eignet sich insbesondere zur Funktionsüberwachung des zuvor beschriebenen erfindungsgemäßen Ultraschallwandlers. Entsprechend sind sämtliche Ausführungen, die zu dem Ultraschallwandler gemacht worden sind, analog auf das Verfahren übertragbar.

Des Weiteren betrifft die Erfindung ein Verfahren zum Betreiben eines Ultraschalldurchflussmessgerätes, wobei das Ultraschalldurchflussmessgerät einen ersten Ultraschallwandler, einen zweiten Ultraschallwandler und eine Steuer- und Auswerteeinheit aufweist. Die Ultraschallwandler sind zum Senden eines Ultraschallsignals auf einen Signalpfad und/oder zum Empfangen eines Ultraschallsignals von dem Signalpfad ausgebildet und stehen über den Signalpfad des Ultraschallsignals in Wirkzusammenhang miteinander. Wenigstens ein zum Senden ausgebildete Ultraschallwandler weist ein Pufferelement auf, wobei das Pufferelement in dem Signalpfad des Ultraschallsignals angeordnet ist und das Pufferelement in dem Signalpfad wenigstens eine zumindest teilweise reflektierende Grenzschicht ausbildet. Das Pufferelement wird durch das Ultraschallfenster gebildet, wobei das Ultraschallfenster eine erhöhte Dicke aufweist, wobei die Dicke definiert ist als die Erstreckung des Ultraschallfensters entlang des Signalpfades des Ultraschallsignals und wobei das durch das Ultraschallfenster gebildete Pufferelement in das Wandlergehäuse hineinragt oder aus dem Wandlergehäuse hinausragt.

Das erfindungsgemäße Verfahren zeichnet sich dadurch aus, dass in einem Sendeschritt das sendende Wandlerelement ein Ultraschallsignal aussendet, wobei das Ultraschallsignal an der Grenzschicht des Pufferelements zumindest teilweise reflektiert und teilweise transmittiert wird. In einem Empfangsschritt empfängt das Wandlerelement des sendenden Ultraschallwandlers oder ein zweites in dem sendenden Ultraschallwandler angeordnetes Wandlerelement den reflektierten Signalanteil und das Wandlerelement des empfangenden Ultraschallwandlers den transmittierten Signalanteil. In einem Überwachungsschritt überwacht die Steuer- und Auswerteeinheit das Empfangen des reflektierten Signalanteils und das Empfangen des transmittierten Signalanteils. In einem anschließenden Signalisierungsschritt wird einer der folgenden Betriebszustände des Ultraschalldurchflussmessgerätes von der Steuer- und Auswerteeinheit signalisiert:
- bei Empfangen des reflektierten Signalanteils und Empfangen des transmittierten Signalanteils: Ultraschalldurchflussmessgerät funktionsfähig,
- bei Empfangen des reflektierten Signalanteils und Ausbleiben des Empfangens des transmittierten Signalanteils: Ultraschalldurchflussmessgerät funktionsfähig, Messrohr leer,
- bei Ausbleiben des Empfangens des reflektierten Signalanteils und Ausbleiben des Empfangens des transmittierten Signalanteils: Ultraschalldurchflussmessgerät im Fehlerzustand, insbesondere sendender Ultraschallwandler im Fehlerzustand, insbesondere Wandlerelement des sendenden Ultraschallwandlers im Fehlerzustand.

Das erfindungsgemäße Verfahren ermöglicht auf einfache Art und Weise zwischen einem Fehlerfall eines Wandlerelements bzw. eines Ultraschallwandlers und einem leeren Messrohr zu unterscheiden. Eine besonders bevorzugte Ausführungsform des erfindungsgemäßen Verfahrens zeichnet sich dadurch aus, dass der transmittierten Signalanteil dann als "nicht empfangen" bewertet wird, wenn der transmittierte Signalanteil unter einem vorgegebenen Grenzwert liegt. Für den Grenzwert kann beispielsweise ein Intensitätswert oder ein Amplitudenwert zugrunde gelegt werden. Diese Ausführungsform des Verfahrens ermöglicht das Erkennen eines leeren Messrohres auch dann, wenn die gesendeten Ultraschallsignale nicht vollständig gedämpft werden.

Das erfindungsgemäße Verfahren eignet sich insbesondere zum Betreiben des zuvor beschriebenen erfindungsgemäßen Ultraschalldurchflussmessgerätes. Entsprechend sind sämtliche Ausführungen, die zu dem Ultraschalldurchflussmessgerät gemacht worden sind, analog auf das Verfahren übertragbar.

Im Einzelnen gibt es nun eine Mehrzahl an Möglichkeiten, den erfindungsgemäßen Ultraschallwandler und das Ultraschalldurchflussmessgerät auszugestalten und weiterzubilden. Zudem gibt es eine Mehrzahl an Möglichkeiten, das erfindungsgemäße Verfahren durchzuführen. Hierzu wird verwiesen auf die den nebengeordneten Patentansprüchen nachgeordneten Patentansprüche sowie auf die Beschreibung bevorzugter Ausführungsbeispiele in Verbindung mit der Zeichnung. In der Zeichnung zeigen
- Fig. 1: ein Beispiel eines Ultraschallwandlers das nicht unter den Schutzumfang des Anspruchs fällt,
- Fig. 2: eine erste Ausgestaltung eines Ultraschallwandlers,
- Fig. 3: eine zweite Ausgestaltung eines Ultraschallwandlers,
- Fig. 4: eine erste Variante eines Ultraschalldurchflussmessgerätes,
- Fig. 5: eine zweite Variante eines Ultraschalldurchflussmessgerätes,
- Fig. 6: eine vierte Ausgestaltung eines Ultraschallwandlers,
- Fig. 7: eine fünfte Ausgestaltung eines Ultraschallwandlers,
- Fig. 8: ein Verfahren zur Funktionsüberwachung eines Ultraschallwandlers und
- Fig. 9: ein Verfahren zum Betreiben eines Ultraschalldurchflussmessgerätes.

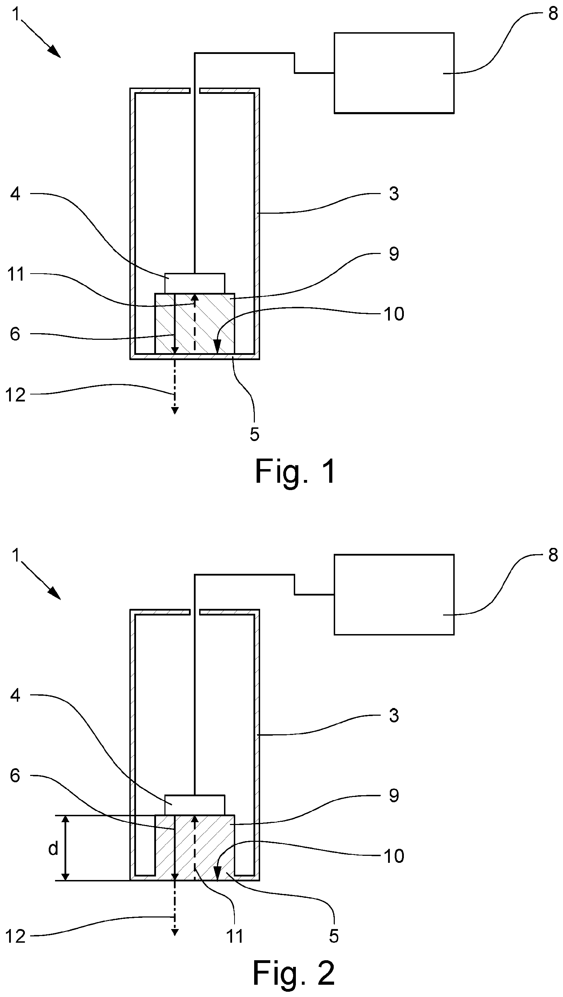

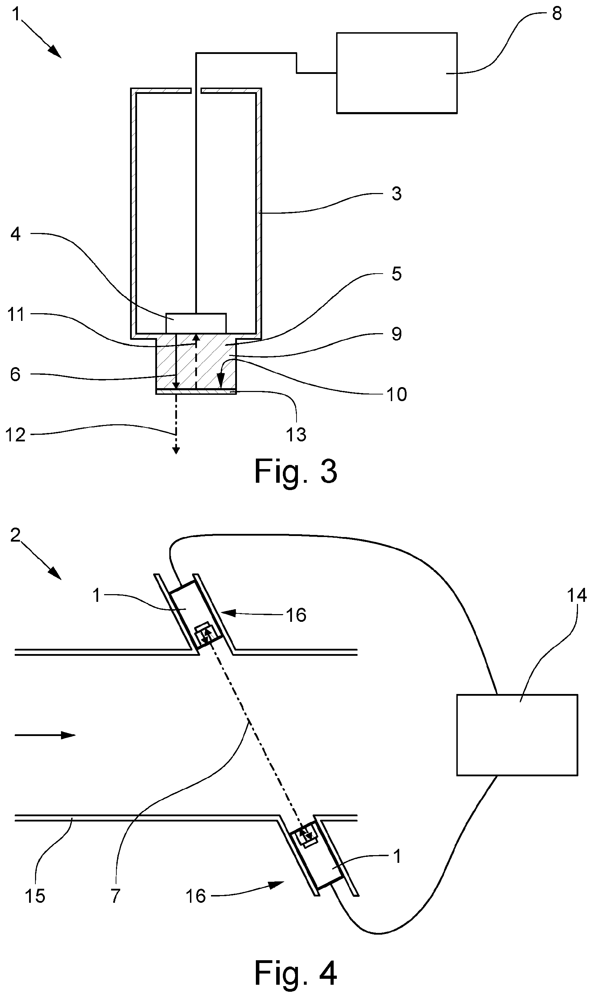

Fig. 1 zeigt ein Beispiel eines Ultraschallwandlers 1, das nicht unter den Schutzumfang des Anspruchs fällt, für ein in Fig. 4 dargestelltes Ultraschalldurchflussmessgerät 2. Der Ultraschallwandler 1 weist ein Wandlergehäuse 3 und ein Wandlerelement 4 auf. Das Wandlergehäuse weist ein Ultraschallfenster 5 auf, über das Ultraschallwellen von dem Ultraschallwandler 1 ausgesendet oder empfangen werden. Das Wandlerelement 4 ist in dem Wandlergehäuse 3 angeordnet und dient zum Senden von Ultraschallsignalen 6 auf einen Signalpfad 7 oder zum Empfangen von Ultraschallsignalen 6 von dem Signalpfad 7. Zudem weist der Ultraschallwandler 1 eine Steuer- und Auswerteeinheit 8 zum Ansteuern des Wandlerelements 4 und Auswerten der Ultraschallsignale 6 auf. Bei dem in Fig. 1 dargestellten Ultraschallwandler 1 ist in dem Wandlergehäuse 3 ein Pufferelement 9 in dem Signalpfad 7 angeordnet. Das Pufferelement 9 bildet in dem Signalpfad 7 eine teilweise reflektierende Grenzschicht 10 aus, die sich auf der dem Wandlerelement 4 abgewandten Seite des Pufferelements 9 befindet. Im Retriebszustand des Ultraschallwandlers 1 sendet das Wandlerelement 4 ein Ultraschallsignal 6 aus, das an der Grenzschicht 10 zumindest teilweise reflektiert wird, wie in Fig. 1 dargestellt. Der reflektierte Signalanteil 11 ist mit einer gestrichelten Linie kenntlich gemacht. Ebenfalls dargestellt ist der transmittierte Signalanteil 12, der durch eine punktgestrichelte Linie kenntlich gemacht ist. Das Wandlerelement 4 empfängt den reflektierten Signalanteil 11 wieder. Der dargestellte Ultraschallwandler 1 weist die Besonderheit auf, dass die Steuer- und Auswerteeinheit 8 derart ausgestaltet ist, dass sie - im Betriebszustand des Ultraschallwandlers 1 - den Empfang des reflektierten Signalanteils 11 überwacht. Wird der reflektierte Signalanteil 11 von dem Wandlerelement 4 empfangen, so ist der Ultraschallwandler 1 in einem funktionsfähigen Zustand. Bleibt jedoch das Empfangen des reflektierten Signalanteils 11 aus, wird also kein Signal von dem Wandlerelement 4 empfangen, erkennt die Steuer- und Auswerteeinheit 8 einen Fehlerzustand des Ultraschallwandlers 1. Die dargestellte Steuer- und Auswerteeinheit 8 ist ferner derart ausgestaltet, dass sie den Fehlerzustand zudem signalisiert. Zudem ist die Steuer- und Auswerteeinheit 8 derart ausgestaltet, dass sie die Intensität des reflektierten Signalanteils 11 mit einem Referenzwert für die Intensität des reflektierten Signalanteils 11 für den Gutzustand des Ultraschallwandlers 1 vergleicht. Bei einer Abweichung über einen vorgegebenen Toleranzbereich hinaus erkennt die Steuer- und Auswerteeinheit einen Fehlerzustand. Dies ist beispielsweise dann der Fall, wenn sich das Wandlerelement 4 gelöst hat und seine Position innerhalb des Wandlergehäuses 3 verändert hat.

Das in Fig. 1 dargestellte Beispiel des Ultraschallwandlers 1, das nicht unter den Schutzumfang des Anspruchs fällt, weist ein Pufferelement 9 auf, das als separates Bauteil ausgestaltet ist. Das Pufferelement 9 ist im Inneren des Wandlergehäuses 3 ausgebildet und zwischen dem Wandlerelement 4 und dem Ultraschallfenster 5 angeordnet. Die reflektierende Grenzschicht 10 ist hierbei zwischen Pufferelement 9 und Ultraschallfenster 5 ausgebildet.

Im Gegensatz zu der in Fig. 1 dargestellten Ausführungsform sind in den Fig. 2 und 3 Ultraschallwandler 1 dargestellt, bei denen das Pufferelement 9 durch das Ultraschallfenster 5 gebildet ist. Bei der in Fig. 2 dargestellten Ausgestaltung weist das Ultraschallfenster 5 eine Dicke d auf und ragt in das Wandlergehäuse 3 hinein. Bei der in Fig. 3 dargestellten Ausgestaltung ragt das Ultraschallfenster 5 in den Außenraum des Ultraschallwandlers 1 hinein.

Bei dem in Fig. 3 dargestellten Ultraschallwandler 1 weist das Pufferelement 9 auf seiner dem Wandlerelement 4 abgewandten Seite eine Beschichtung 13 auf, die dazu dient, die Reflexionseigenschaften der Grenzschicht 10 zu verbessern, z. B. zu vergrößern.

Fig. 4 zeigt ein Ultraschalldurchflussmessgerät 2, das zwei der in Fig. 1 dargestellten Ultraschallwandler 1 aufweist. Zudem weist das Ultraschalldurchflussmessgerät 2 eine Steuer- und Auswerteeinheit 14 auf. Bei dem dargestellten Ausführungsbeispiel sind beide Ultraschallwandler 2 sowohl zum Senden von Ultraschallsignalen 6 als auch zum Empfangen von Ultraschallsignalen 6 ausgestaltet. Die beiden Ultraschallwandler 1 auf einander gegenüberliegenden Seiten des Messrohres 15 angeordnet und sind ferner in Durchflussrichtung, kenntlich gemacht durch den Pfeil, versetzt zueinander angeordnet. Die beiden Ultraschallwandler stehen über den Signalpfad 7 in Wirkzusammenhang miteinander. Bei der dargestellten Ausgestaltung sind die Ultraschallwandler 1 in Wandlertaschen 16 des Messrohres 15 angeordnet. Im Betriebszustand des Ultraschalldurchflussmessgerätes 2 sendet das Wandlerelement 4 eines sendenden Ultraschallwandlers 1 ein Ultraschallsignal 6 aus, wobei das Ultraschallsignal 6 an der Grenzschicht 10 des Pufferelements 9 des sendenden Ultraschallwandlers 1 zumindest teilweise reflektiert wird und teilweise transmittiert wird. Der reflektierte Signalanteil 11 wird dann von dem Wandlerelement 4 des sendenden Ultraschallwandlers 1 empfangen, der transmittierte Signalanteil 12 wird von dem Wandlerelement 4 des empfangenden Ultraschallwandlers 1 empfangen.

Die Steuer- und Auswerteeinheit 14 des Ultraschalldurchflussmessgerätes 2 ist derart ausgestaltet, dass sie im Betriebszustand des Ultraschalldurchflussmessgerätes 2 den Empfang des reflektierten Signalanteils 11 und den Empfang des transmittierten Signalanteils 12 überwacht. Je nachdem, welche Signalanteile von den Wandlerelementen 4 empfangen werden, erkennt und signalisiert die Steuer- und Auswerteeinheit 14 einen der folgenden Betriebszustände des Ultraschalldurchflussmessgerätes 2:
- bei Empfangen des reflektierten Signalanteils 11 und Empfangen des transmittierten Signalanteils 12: Ultraschalldurchflussmessgerät 2 funktionsfähig,
- bei Empfangen des reflektierten Signalanteils 11 und Ausbleiben des Empfangens des transmittierten Signalanteils 12: Ultraschalldurchflussmessgerät funktionsfähig, Messrohr 15 leer,
- bei Ausbleiben des Empfangens des reflektierten Signalanteils 11 und Ausbleiben des Empfangens des transmittierten Signalanteils 12: Ultraschalldurchflussmessgerät 2 im Fehlerzustand, insbesondere sendender Ultraschallwandler im Fehlerzustand, insbesondere Wandlerelement 4 des sendenden Ultraschallwandlers 1 im Fehlerzustand.

In der dargestellten Ausgestaltung des Ultraschalldurchflussmessgerätes 2 sind die Ultraschallwandler 1 gemäß der in Fig. 1 dargestellten Ausführungsform ausgebildet. Denkbar ist jedoch auch eine der anderen Ausgestaltungen oder eine Mischung, also eine unterschiedliche Ausgestaltung der beiden Ultraschallwandler 1. Die Steuer- und Auswerteeinheit 14 ist weiterhin derart ausgestaltet, dass sie den transmittierten Signalanteil 12 dann als "nicht empfangen" bewertet, wenn der transmittierte Signalanteil 12 unter einem vorgegebenen Grenzwert liegt. Vorliegend wird als Grenzwert ein Intensitätswert des transmittierten Signalanteils 12 verwendet.

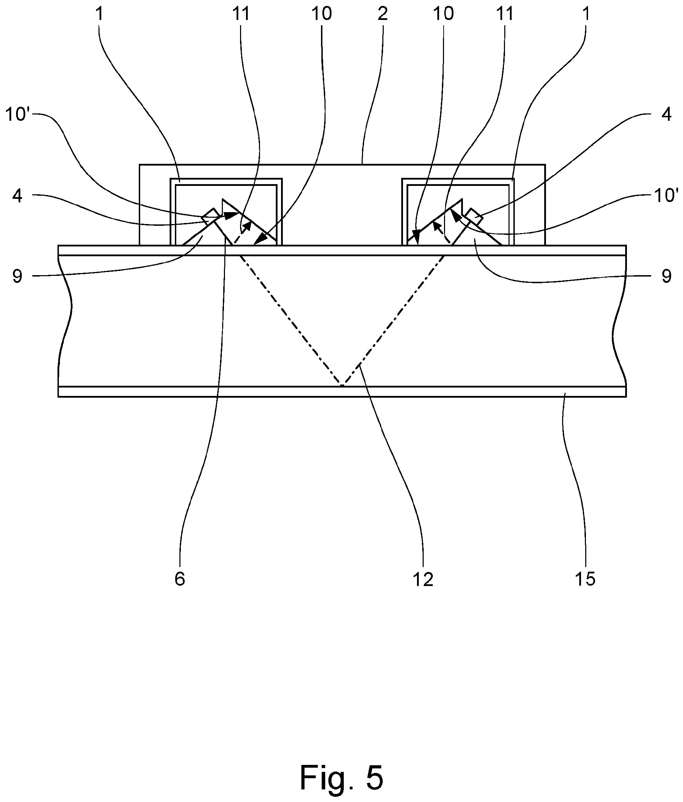

Fig. 5 zeigt ein Ultraschalldurchflussmessgerät 2, das als Clamp-On-Ultraschalldurchflussmessgerät ausgestaltet ist. Das Ultraschalldurchflussmessgerät 2 wird von außen auf das Messrohr 15 aufgeklemmt. Der Klemmmechanismus ist hier nicht dargestellt, da er für die vorliegende Erfindung nicht relevant ist. Das Ultraschalldurchflussmessgerät 2 weist zwei Ultraschallwandler 1 auf. Beide Ultraschallwandler 1 weisen jeweils ein Wandlerelement 4 und ein Pufferelement 9 auf. Die Wandlerelemente 4 sind hier derart ausgerichtet, dass sie unter einem schrägen Winkel auf die Messrohroberfläche abstrahlen. Das wird dadurch realisiert, dass das Pufferelement 9, bzw. die Pufferelemente 9, einen im Wesentlichen dreieckigen Querschnitt haben. In der vorliegenden Darstellung sind die Signalpfade der Ultraschallsignale 6 lediglich schematisch dargestellt, da der Verlauf der Signalpfade 6 abhängig ist von den verwendeten Materialien des Pufferelements 9, des Messrohres 15 und auch dem Medium, das in dem Messrohr 15 transportiert wird. Das Wandlerelement 4 des sendenden Ultraschallwandlers 2 sendet ein Ultraschallsignal 6 aus, das an der Grenzschicht 10, die zwischen dem Pufferelement 9 und der Messrohroberfläche ausgebildet ist, reflektiert wird. Hier entspricht der Einfallswinkel dem Ausfallswinkel, sodass der reflektierte Signalanteil 11 unter dem gleichen Winkel reflektiert wird, wie er auf die Grenzschicht 10 trifft. Der reflektierte Signalanteil 10 trifft dann auf eine zweite Grenzschicht 10', die das Pufferelement 9 ausbildet. Von hier wird der reflektierte Signalanteil 11 wieder zurückreflektiert auf die Grenzschicht 10 und von dort wieder zurück reflektiert auf das Wandlerelement 4, das den reflektierten Signalanteil empfängt. Der transmittierte Signalanteil 12 wird in das Messrohr 15 ausgesendet und wird an der Messrohrinnenseite reflektiert hin zu dem zweiten Wandlerelement 4 des zweiten Ultraschallwandlers 2. Dieses Wandlerelement 4 empfängt dann den transmittierten Signalanteil 12.

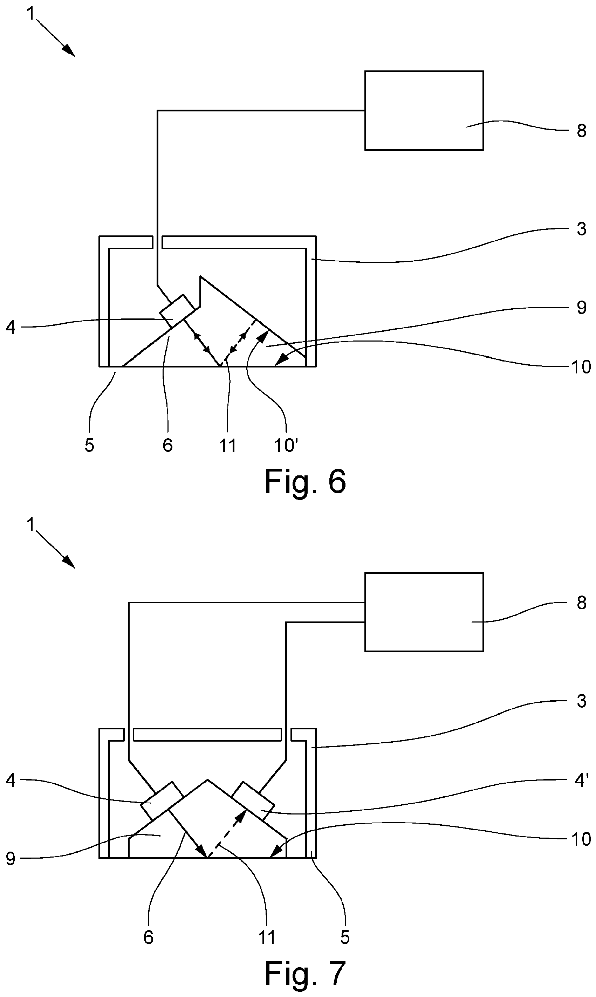

In der Fig. 6 ist der Ultraschallwandler des in Fig. 5 dargestellten Ultraschalldurchflussmessgerätes 2 dargestellt. Der Ultraschallwandler 1 weist ein Gehäuse 3 auf, in dem sich ein Wandlerelement 4 befindet. Der Ultraschallwandler 1 weist ein Pufferelement 9 auf, das eine erste Grenzschicht 10 und eine zweite Grenzschicht 10' im Strahlengang des Ultraschallsignals 6 ausbildet. Wie bereits im Zusammenhang mit Fig. 5 erläutert, sendet das Wandlerelement 4 Ultraschallsignale 6 aus, die an der Grenzschicht 10 teilweise reflektiert werden. Der Ausfallswinkel des reflektierten Signalanteils 11 entspricht dem Einfallswinkel des Ultraschallsignals 6. Der reflektierte Signalanteil 11 wird zu der zweiten Grenzschicht 10' reflektiert und trifft senkrecht auf die zweite Grenzschicht 10'. Von hier wird der reflektierte Signalanteil erneut zurückreflektiert zu der Grenzschicht 10 und von hier aus erneut zurückreflektiert zum Wandlerelement 4. Die Steuer- und Auswerteeinheit 8 des Ultraschallwandlers 1 ist derart ausgestaltet, dass sie den Empfang des reflektierten Signalanteils 11 überwacht und beim Ausbleiben einen Fehlerzustand des Ultraschallwandlers 1 erkennt.

Eine alternative Ausgestaltung eines Ultraschallwandlers 1 ist in Fig. 7 dargestellt. Hier weist der Ultraschallwandler 1 ein erstes Wandlerelement 4 auf, das zum Senden und Empfangen von Ultraschallsignalen ausgebildet und verwendet wird. Der Ultraschallwandler 1 weist jedoch auch ein zweites Wandlerelement 4' auf, das dazu genutzt wird, den reflektierten Signalanteil 11 zu empfangen. Im Unterschied zu der in Fig. 6 dargestellten Ausführungsform wird hier also der reflektierte Signalanteil 11 nicht zum Wandlerelement 4 zurückreflektiert, sondern wird von dem Wandlerelement 4' empfangen. Die Steuer- und Auswerteeinheit 8 ist dann so ausgestaltet, dass sie den Empfang des reflektierten Signalanteils 11 des zweiten Wandlerelements 4' überwacht. Beim Ausbleiben des reflektierten Signalanteils 11 erkennt die Steuer- und Auswerteeinheit 8 einen Fehlerzustand.

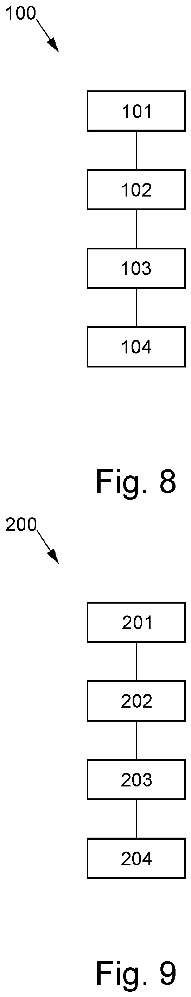

Fig. 8 zeigt ein Verfahren 100 zur Funktionsüberwachung eines Ultraschallwandlers, wie er in den Fig. 1 bis 3 und 6 dargestellt ist. In einem Sendeschritt 101 wird ein Ultraschallsignal ausgesendet, wobei das Ultraschallsignal an der Grenzfläche zumindest teilweise reflektiert wird. In einem Empfangsschritt 102 der reflektierte Signalanteil von dem Wandlerelement empfangen. In einem Überwachungsschritt 103 wird das Empfangen des reflektierten Signalanteils überwacht und einem Signalisationsschritt 104 wird im Falle des Ausbleibens des Empfangens eines reflektierten Signalanteils ein Fehlerzustand signalisiert.

Fig. 9 zeigt ein Verfahren 200 zum Betreiben eines Ultraschalldurchflussmessgerätes, wie es in Fig. 4 dargestellt ist. Bei dem dargestellten Verfahren wird in einem Sendeschritt 201 von dem sendenden Wandlerelement ein Ultraschallsignal ausgesendet, wobei das Ultraschallsignal an der Grenzschicht des Pufferelements zumindest teilweise reflektiert und teilweise transmittiert wird. In einem Empfangsschritt 202 empfängt das Wandlerelement des sendenden Ultraschallwandlers den reflektierten Signalanteil und das Wandlerelement des empfangenden Ultraschallwandlers den transmittierten Signalanteil. In einem Überwachungsschritt 203 überwacht die Steuer- und Auswerteeinheit das Empfangen des reflektierten Signalanteils und das Empfangen des transmittierten Signalanteils. In einem Signalisierungsschritt 204 wird einer der folgenden Betriebszustände des Ultraschalldurchflussmessgerätes von der Steuer- und Auswerteeinheit signalisiert:
- bei Empfangen des reflektierten Signalanteils und Empfangen des transmittierten Signalanteils: Ultraschalldurchflussmessgerät funktionsfähig,
- bei Empfangen des reflektierten Signalanteils und Ausbleiben des Empfangens des transmittierten Signalanteils: Messrohr leer,
- bei Ausbleiben des Empfangens des reflektierten Signalanteils und Ausbleiben des Empfangens des transmittierten Signalanteils: Ultraschalldurchflussmessgerät im Fehlerzustand, insbesondere Wandlerelement des sendenden Ultraschallwandlers im Fehlerzustand.

Bei dem dargestellten Verfahren wird der transmittierten Signalanteil dann als "nicht empfangen" bewertet, wenn der transmittierte Signalanteil unter einem vorgegebenen Grenzwert liegt. Als Grenzwert wird hier ein Intensitätswert des transmittierten Signalanteils vorgegeben.

### Bezugszeichen

- 1: Ultraschallwandler
- 2: Ultraschalldurchflussmessgerät
- 3: Wandlergehäuse
- 4: Wandlerelement
- 4': zweites Wandlerelement
- 5: Ultraschallfenster
- 6: Ultraschallsignal
- 7: Signalpfad
- 8: Steuer- und Auswerteeinheit
- 9: Pufferelement
- 10: Grenzschicht
- 10': zweite Grenzschicht
- 11: reflektierter Signalanteil
- 12: transmittierter Signalanteil
- 13: Beschichtung
- 14: Steuer- und Auswerteeinheit
- 15: Messrohr
- 16: Wandlertasche

- 100: Verfahren
- 101: Sendeschritt
- 102: Empfangsschritt
- 103: Überwachungsschritt
- 104: Signalisierungsschritt

- 200: Verfahren
- 201: Sendeschritt
- 202: Empfangsschritt
- 203: Überwachungsschritt
- 204: Signalisierungsschritt

- 1:

## Patentansprüche

1. Ultraschallwandler (1) für ein Ultraschalldurchflussmessgerät (2), mit einem Wandlergehäuse (3) und mit einem Wandlerelement (4), wobei das Wandlergehäuse (3) ein Ultraschallfenster (5) aufweist und wobei das Wandlerelement (4) im Wandlergehäuse (3) angeordnet ist und zum Senden von Ultraschallsignalen (6) auf einen Signalpfad (7) und zum Empfangen von Ultraschallsignalen (6) von dem Signalpfad (7) ausgebildet ist, und mit einer Steuer- und Auswerteeinheit (8) zum Ansteuern des Wandlerelements (3) und Auswerten der Ultraschallsignale (6), wobei in oder an dem Wandlergehäuse (3) ein Pufferelement (9) in dem Signalpfad (7) angeordnet ist, wobei das Pufferelement (9) in dem Signalpfad (7) wenigstens eine zumindest teilweise reflektierende Grenzschicht (10) ausbildet,
wobei im Betriebszustand des Ultraschallwandlers (1) das Wandlerelement (4) ein Ultraschallsignal (6) aussendet, wobei das Ultraschallsignal (6) an der Grenzschicht (10) des Pufferelements (9) zumindest teilweise reflektiert wird, wobei der reflektierte Signalanteil (11) von dem Wandlerelement (4) empfangen wird,
und wobei die Steuer- und Auswerteeinheit (8) derart ausgestaltet ist, dass sie im Betriebszustand des Ultraschallwandlers (1) den Empfang des reflektierten Signalanteils (11) überwacht und beim Ausbleiben des Empfangens eines reflektierten Signalanteils (11) einen Fehlerzustand des Ultraschallwandlers (1) erkennt,
**dadurch gekennzeichnet,**
**dass** das Pufferelement (9) durch das Ultraschallfenster (5) gebildet ist, und dass das Ultraschallfenster (5) eine erhöhte Dicke aufweist, wobei die Dicke definiert ist als die Erstreckung des Ultraschallfensters (5) entlang des Signalpfades (7) des Ultraschallsignals (6), und dass das durch das Ultraschallfenster (5) gebildete Pufferelement (9) in das Wandlergehäuse (3) hineinragt oder aus dem Wandlergehäuse (3) hinausragt.

2. Ultraschallwandler (1) für ein Ultraschalldurchflussmessgerät (2), mit einem Wandlergehäuse (3) und mit einem Wandlerelement (4), wobei das Wandlergehäuse (3) ein Ultraschallfenster (5) aufweist und wobei das Wandlerelement (4) im Wandlergehäuse (3) angeordnet ist und zum Senden von Ultraschallsignalen (6) auf einen Signalpfad (7) und zum Empfangen von Ultraschallsignalen (6) von dem Signalpfad (7) ausgebildet ist, und mit einer Steuer- und Auswerteeinheit (8) zum Ansteuern des Wandlerelements (3) und Auswerten der Ultraschallsignale (6), wobei in oder an dem Wandlergehäuse (3) ein Pufferelement (9) in dem Signalpfad (7) angeordnet ist, dass das Pufferelement (9) in dem Signalpfad (7) wenigstens eine zumindest teilweise reflektierende Grenzschicht (10) ausbildet,
wobei in dem Wandlergehäuse (3) ein zweites Wandlerelement (4') angeordnet ist,
wobei im Betriebszustand des Ultraschallwandlers (1) das Wandlerelement (4) ein Ultraschallsignal (6) aussendet, wobei das Ultraschallsignal (6) an der Grenzschicht (10) des Pufferelements (9) zumindest teilweise reflektiert wird, wobei das zweite Wandlerelement (4') derart in dem Wandlergehäuse angeordnet ist, dass der reflektierte Signalanteil (11) von dem zweiten Wandlerelement (4') empfangen wird,
und wobei die Steuer- und Auswerteeinheit (8) derart ausgestaltet ist, dass sie im Betriebszustand des Ultraschallwandlers (1) den Empfang des reflektierten Signalanteils (11) überwacht und beim Ausbleiben des Empfangens eines reflektierten Signalanteils (11) einen Fehlerzustand des Ultraschallwandlers (1) erkennt,
**dadurch gekennzeichnet,**
**dass** das Pufferelement (9) durch das Ultraschallfenster (5) gebildet ist, und dass das Ultraschallfenster (5) eine erhöhte Dicke aufweist, wobei die Dicke definiert ist als die Erstreckung des Ultraschallfensters (5) entlang des Signalpfades (7) des Ultraschallsignals (6), und dass das durch das Ultraschallfenster (5) gebildete Pufferelement (9) in das Wandlergehäuse (3) hineinragt oder aus dem Wandlergehäuse (3) hinausragt.

3. Ultraschallwandler (1) nach Anspruch 1 oder 2, **dadurch gekennzeichnet, dass** das Pufferelement (9) wenigstens eine zweite zumindest teilweise reflektierende Grenzschicht (10') in dem Signalpfad (7) ausbildet, wobei im Betriebszustand des Ultraschallwandlers (1) der reflektierte Signalanteil (11) an der ersten Grenzschicht (10) zu der zweiten Grenzschicht (10') reflektiert wird.

4. Ultraschallwandler (1) nach einem der Ansprüche 1 bis 3, **dadurch gekennzeichnet, dass** auf die durch das Pufferelement (9) gebildete Grenzschicht (10) - oder sofern mehrere Grenzschichten (10, 10') ausgebildet sind, auf wenigstens eine der Grenzschichten (10, 10') - eine die Teilreflexion verstärkende Beschichtung (13) aufgebracht ist.

5. Ultraschallwandler (1) nach einem der Ansprüche 1 bis 4, **dadurch gekennzeichnet, dass** die Steuer- und Auswerteeinheit (8) derart ausgestaltet ist, dass sie im Betriebszustand des Ultraschallwandlers (1) eine den reflektierten Signalanteil (11) beschreibende Größe, insbesondere die Intensität des reflektierten Signalanteils, mit einem Referenzwert vergleicht und bei einer Abweichung über einen vorgegebenen Toleranzbereich hinaus ein Fehlersignal ausgibt.

6. Ultraschalldurchflussmessgerät (2) zur Bestimmung des Durchflusses eines strömenden Mediums, mit einem ersten Ultraschallwandler (1) und mit einem zweiten Ultraschallwandler (1) und mit einer Steuer- und Auswerteeinheit (14), wobei die Ultraschallwandler (1) zum Senden eines Ultraschallsignals (6) auf einen Signalpfad (7) und/oder zum Empfangen eines Ultraschallsignals (6) von dem Signalpfad (7) ausgebildet sind und über den Signalpfad (7) des Ultraschallsignals (6) miteinander in Wirkzusammenhang stehen,
**dadurch gekennzeichnet,**
**dass** wenigstens der zum Senden ausgebildete Ultraschallwandler (1) ein Pufferelement (9) aufweist, dass das Pufferelement (9) in dem Signalpfad (7) des Ultraschallsignals (6) in oder an dem Wandlergehäuse (3) angeordnet ist, dass das Pufferelement (9) in dem Signalpfad (7) wenigstens eine zumindest teilweise reflektierende Grenzschicht (10) ausbildet, dass das Pufferelement (9) durch das Ultraschallfenster (5) gebildet ist, und dass das Ultraschallfenster (5) eine erhöhte Dicke aufweist, wobei die Dicke definiert ist als die Erstreckung des Ultraschallfensters (5) entlang des Signalpfades (7) des Ultraschallsignals (6), und dass das durch das Ultraschallfenster (5) gebildete Pufferelement (9) in das Wandlergehäuse (3) hineinragt oder aus dem Wandlergehäuse (3) hinausragt, dass im Betriebszustand des Ultraschalldurchflussmessgerätes (2) das Wandlerelement (4) des sendenden Ultraschallwandlers (1) ein Ultraschallsignal (6) aussendet, wobei das Ultraschallsignal (6) an der Grenzschicht (10) des Pufferelements (9) zumindest teilweise reflektiert wird und teilweise transmittiert wird,
**dass** entweder
• der reflektierte Signalanteil (11) von dem Wandlerelement (4) des sendenden Ultraschallwandlers (1) empfangen wird und der transmittierte Signalanteil (12) von dem Wandlerelement (4) des empfangenden Ultraschallwandler (1) empfangen wird,
oder
• in dem Wandlergehäuse des zum Senden ausgebildeten Ultraschallwandlers (1) ein zweites Wandlerelement (4') angeordnet ist und dass der reflektierte Signalanteil (11) von dem zweiten Wandlerelement (4') des sendenden Ultraschallwandlers (1) empfangen wird und der transmittierte Signalanteil (12) von dem Wandlerelement (4) des empfangenden Ultraschallwandler (1) empfangen wird,
und **dass** die Steuer- und Auswerteeinheit (14) derart ausgestaltet ist, dass sie im Betriebszustand des Ultraschalldurchflussmessgerätes (2) den Empfang des reflektierten Signalanteils (11) und den Empfang des transmittierten Signalanteils (12) überwacht und einen der folgenden Betriebszustände des Ultraschalldurchflussmessgerätes (2) erkennt und signalisiert:
• bei Empfangen des reflektierten Signalanteils (11) und Empfangen des transmittierten Signalanteils (12): Ultraschalldurchflussmessgerät (1) funktionsfähig,
• bei Empfangen des reflektierten Signalanteils (11) und Ausbleiben des Empfangens des transmittierten Signalanteils (12): Messrohr (15) leer,
• bei Ausbleiben des Empfangens des reflektierten Signalanteils (11) und Ausbleiben des Empfangens des transmittierten Signalanteils (12): Ultraschalldurchflussmessgerät (2) im Fehlerzustand, insbesondere Wandlerelement (4) des sendenden Ultraschallwandlers (1) im Fehlerzustand.

7. Ultraschalldurchflussmessgerät (2) nach Anspruch 6, **dadurch gekennzeichnet, dass** wenigstens ein Ultraschallwandler (1) gemäß den Merkmalen eines der Ansprüche 1 bis 5 ausgebildet ist.

8. Ultraschalldurchflussmessgerät (2) nach Anspruch 6 oder 7, **dadurch gekennzeichnet, dass** die Steuer- und Auswerteeinheit (14) derart ausgestaltet ist, dass sie den transmittierten Signalanteil (12) dann als "nicht empfangen" bewertet, wenn der transmittierte Signalanteil (12) unter einem vorgegebenen Grenzwert liegt.

9. Verfahren (200) zum Betreiben eines Ultraschalldurchflussmessgerätes, wobei das Ultraschalldurchflussmessgerät einen ersten Ultraschallwandler, einen zweiten Ultraschallwandler und eine Steuer- und Auswerteeinheit aufweist, wobei die Ultraschallwandler zum Senden eines Ultraschallsignals auf einen Signalpfad und/oder zum Empfangen eines Ultraschallsignals von dem Signalpfad ausgebildet sind und über den Signalpfad des Ultraschallsignals miteinander in Wirkzusammenhang stehen, wobei wenigstens der zum Senden ausgebildete Ultraschallwandler ein Pufferelement aufweist, das Pufferelement in oder an dem Wandlergehäuse in dem Signalpfad des Ultraschallsignals angeordnet ist und das Pufferelement in dem Signalpfad wenigstens eine zumindest teilweise reflektierende Grenzschicht ausbildet, wobei das Pufferelement (9) durch das Ultraschallfenster (5) gebildet ist, und wobei das Ultraschallfenster (5) eine erhöhte Dicke aufweist, wobei die Dicke definiert ist als die Erstreckung des Ultraschallfensters (5) entlang des Signalpfades (7) des Ultraschallsignals (6), und wobei das durch das Ultraschallfenster (5) gebildete Pufferelement (9) in das Wandlergehäuse (3) hineinragt oder aus dem Wandlergehäuse (3) hinausragt,
wobei in einem Sendeschritt (201) das sendende Wandlerelement ein Ultraschallsignal aussendet, wobei das Ultraschallsignal an der Grenzschicht des Pufferelements zumindest teilweise reflektiert und teilweise transmittiert wird,
wobei in einem Empfangsschritt (202) das Wandlerelement des sendenden Ultraschallwandlers oder ein zweites in dem sendenden Ultraschallwandler angeordnetes Wandlerelement den reflektierten Signalanteil empfängt und das Wandlerelement des empfangenden Ultraschallwandlers den transmittierten Signalanteil empfängt,
wobei in einem Überwachungsschritt (203) die Steuer- und Auswerteeinheit das Empfangen des reflektierten Signalanteils und das Empfangen des transmittierten Signalanteils überwacht und
wobei in einem Signalisierungsschritt (204) einer der folgenden Betriebszustände des Ultraschalldurchflussmessgerätes von der Steuer- und Auswerteeinheit signalisiert wird:
• bei Empfangen des reflektierten Signalanteils und Empfangen des transmittierten Signalanteils: Ultraschalldurchflussmessgerät funktionsfähig,
• bei Empfangen des reflektierten Signalanteils und Ausbleiben des Empfangens des transmittierten Signalanteils: Messrohr leer,
• bei Ausbleiben des Empfangens des reflektierten Signalanteils und Ausbleiben des Empfangens des transmittierten Signalanteils: Ultraschalldurchflussmessgerät im Fehlerzustand, insbesondere Wandlerelement des sendenden Ultraschallwandlers im Fehlerzustand.

10. Verfahren (200) nach Anspruch 9, **dadurch gekennzeichnet, dass** der transmittierten Signalanteil dann als "nicht empfangen" bewertet wird, wenn der transmittierte Signalanteil unter einem vorgegebenen Grenzwert liegt.

## Claims

1. Ultrasonic transducer (1) for an ultrasonic flowmeter (2), comprising a transducer housing (3) and a transducer element (4), wherein the transducer housing (3) has an ultrasound window (5) and wherein the transducer element (4) is arranged in the transducer housing (3) and is designed to emit ultrasonic signals (6) to a signal path (7) and designed to receive ultrasonic signals (6) from the signal path (7), and comprising a control and evaluation unit (8) for controlling the transducer element (3) and evaluating the ultrasonic signals (6), wherein a buffer element (9) is arranged in or on the transducer housing (3) within the signal path (7) such that the buffer element (9) forms at least one at least partially reflective boundary layer (10) in the signal path (7),
wherein, during operation of the ultrasonic transducer (1), the transducer element (4) emits an ultrasonic signal (6), wherein the ultrasonic signal (6) is at least partially reflected at the boundary layer (10) of the buffer element (9), and wherein the reflected signal component (11) is received by the transducer element (4),
and wherein the control and evaluation unit (8) is designed such that, when the ultrasonic transducer (1) is in operation, it monitors the reception of the reflected signal component (11) and, if no reflected signal component (11) is received, detects an error state of the ultrasonic transducer (1),
**characterized in**
**that** the buffer element (9) is formed by the ultrasound window (5), and that the ultrasound window (5) has an increased thickness, wherein the thickness is defined as the extent of the ultrasound window (5) along the signal path (7) of the ultrasonic signal (6), and that the buffer element (9) formed by the ultrasound window (5) protrudes into the transducer housing (3) or protrudes out of the transducer housing (3).

2. Ultrasonic transducer (1) for an ultrasonic flowmeter (2), comprising a transducer housing (3) and a transducer element (4), wherein the transducer housing (3) has an ultrasound window (5) and wherein the transducer element (4) is arranged in the transducer housing (3) and is designed to emit ultrasonic signals (6) to a signal path (7) and designed to receive ultrasonic signals (6) from the signal path (7), and comprising a control and evaluation unit (8) for controlling the transducer element (3) and evaluating the ultrasonic signals (6), wherein a buffer element (9) is arranged in or on the transducer housing (3) within the signal path (7) such that the buffer element (9) forms at least one at least partially reflective boundary layer (10) in the signal path (7),
wherein a second transducer element (4') is arranged in the transducer housing (3),
wherein, during operation of the ultrasonic transducer (1), the transducer element (4) emits an ultrasonic signal (6), wherein the ultrasonic signal (6) is at least partially reflected at the boundary layer (10) of the buffer element (9), wherein the second transducer element (4') is arranged in the transducer housing in such a manner that the reflected signal component (11) is received by the second transducer element (4'),
and wherein the control and evaluation unit (8) is designed such that, when the ultrasonic transducer (1) is in operation, it monitors the reception of the reflected signal component (11) and, if no reflected signal component (11) is received, detects an error state of the ultrasonic transducer (1),
**characterized in**
**that** the buffer element (9) is formed by the ultrasound window (5), and that the ultrasound window (5) has an increased thickness, wherein the thickness is defined as the extent of the ultrasound window (5) along the signal path (7) of the ultrasonic signal (6), and that the buffer element (9) formed by the ultrasound window (5) protrudes into the transducer housing (3) or protrudes out of the transducer housing (3).

3. Ultrasonic transducer (1) according to claim 1 or 2, **characterized in that** the buffer element (9) forms at least one second, at least partially reflective boundary layer (10') in the signal path (7), wherein, during operation of the ultrasonic transducer (1), the reflected signal component (11) is reflected from the first boundary layer (10) to the second boundary layer (10').

4. Ultrasonic transducer (1) according to any one of claims 1 through 3, **characterized in that** a coating (13) that enhances partial reflection is applied to the boundary layer (10) formed by the buffer element (9)-or, if multiple boundary layers (10, 10') are formed, to at least one of the boundary layers (10, 10').

5. Ultrasonic transducer (1) according to any one of claims 1 through 4, **characterized in that** the control and evaluation unit (8) is designed such that, when the ultrasonic transducer (1) is in operation, it compares a parameter describing the reflected signal component (11), in particular, the intensity of the reflected signal component, with a reference value and, in the event of a deviation beyond a predetermined tolerance range, outputs an error signal.

6. Ultrasonic flowmeter (2) for determining the flow rate of a flowing medium, comprising a first ultrasonic transducer (1), a second ultrasonic transducer (1), and a control and evaluation unit (14), wherein the ultrasonic transducers (1) are designed to emit an ultrasonic signal (6) along a signal path (7) and/or to receive an ultrasonic signal (6) from the signal path (7), and are operatively connected to one another via the signal path (7) of the ultrasonic signal (6),
**characterized in**
**that** at least the ultrasonic transducer (1) designed for use as a transmitter includes a buffer element (9), that the buffer element (9) is arranged in the signal path (7) of the ultrasonic signal (6) within or on the transducer housing (3), that the buffer element (9) forms at least one at least partially reflective boundary layer (10) in the signal path (7), that the buffer element (9) is formed by the ultrasound window (5), and that the ultrasound window (5) has an increased thickness, wherein the thickness is defined as the extent of the ultrasound window (5) along the signal path (7) of the ultrasonic signal (6), and that the buffer element (9) formed by the ultrasound window (5) protrudes into the transducer housing (3) or protrudes out of the transducer housing (3), that, when the ultrasonic flowmeter (2) is in operation, the transducer element (4) of the emitting ultrasonic transducer (1) emits an ultrasonic signal (6), wherein the ultrasonic signal (6) is at least partially reflected at the boundary layer (10) of the buffer element (9) and is partially emitted,
**that** either
• the reflected signal component (11) is received by the transducer element (4) of the emitting ultrasonic transducer (1), and the transmitted signal component (12) is received by the transducer element (4) of the receiving ultrasonic transducer (1),
or
• a second transducer element (4') is arranged in the transducer housing of the ultrasonic transducer (1) designed for transmission, and that the reflected signal component (11) is received by the second transducer element (4') of the emitting ultrasonic transducer (1), and the transmitted signal component (12) is received by the transducer element (4) of the receiving ultrasonic transducer (1),
and **that** the control and evaluation unit (14) is designed such that, when the ultrasonic flowmeter (2) is in operation, it monitors the reception of the reflected signal component (11) and the reception of the transmitted signal component (12), and detects and signals one of the following operating states of the ultrasonic flowmeter (2):
• upon receiving the reflected signal component (11) and receiving the transmitted signal component (12): the ultrasonic flowmeter (1) is functional,
• upon receiving the reflected signal component (11) and failing to receive the transmitted signal component (12): measuring tube (15) is empty,
• if the reflected signal component (11) is not received and the transmitted signal component (12) is not received: the ultrasonic flowmeter (2) is in an error state; specifically, the transducer element (4) of the emitting ultrasonic transducer (1) is in an error state.

7. Ultrasonic flowmeter (2) according to claim 6, **characterized in that** at least one ultrasonic transducer (1) is designed in accordance with the features of any one of claims 1 through 5.

8. Ultrasonic flowmeter (2) according to claim 6 or 7, **characterized in that** the control and evaluation unit (14) is designed such that it evaluates the transmitted signal component (12) as "not received" if the transmitted signal component (12) falls below a predetermined threshold value.

9. Method (200) for operating an ultrasonic flowmeter, wherein the ultrasonic flowmeter comprises a first ultrasonic transducer, a second ultrasonic transducer, and a control and evaluation unit, wherein the ultrasonic transducers are designed to emit an ultrasonic signal along a signal path and/or to receive an ultrasonic signal from the signal path and are operatively connected to one another via the signal path of the ultrasonic signal, wherein at least the ultrasonic transducer designed for transmission comprises a buffer element, the buffer element is arranged in or on the transducer housing within the signal path of the ultrasonic signal, and the buffer element forms at least one at least partially reflective boundary layer within the signal path, wherein the buffer element (9) is formed by the ultrasound window (5), and wherein the ultrasound window (5) has an increased thickness, wherein the thickness is defined as the extent of the ultrasound window (5) along the signal path (7) of the ultrasonic signal (6), and wherein the buffer element (9) formed by the ultrasound window (5) protrudes into the transducer housing (3) or protrudes out of the transducer housing (3),
wherein, in an emitting step (201), the emitting transducer element emits an ultrasonic signal, wherein the ultrasonic signal is at least partially reflected and partially transmitted at the boundary layer of the buffer element,
wherein, in a receiving step (202), the transducer element of the emitting ultrasonic transducer or a second transducer element arranged within the emitting ultrasonic transducer receives the reflected signal component, and the transducer element of the receiving ultrasonic transducer receives the transmitted signal component,
wherein, in a monitoring step (203), the control and evaluation unit monitors the reception of the reflected signal component and the reception of the transmitted signal component, and
wherein, in a signaling step (204), the control and evaluation unit signals one of the following operating states of the ultrasonic flowmeter:
• upon receiving the reflected signal component and receiving the transmitted signal component: the ultrasonic flowmeter is functional,
• upon receiving the reflected signal component and failing to receive the transmitted signal component: the measuring tube is empty,
• upon failing to receive the reflected signal component and failing to receive the transmitted signal component: the ultrasonic flowmeter is in the error state, in particular, the transducer element of the emitting ultrasonic transducer is in the error state.

10. Method (200) according to claim 9, **characterized in that** the transmitted signal component is evaluated as "not received" if the transmitted signal component falls below a predetermined threshold value.

## Revendications

1. Transducteur à ultrasons (1) pour débitmètre à ultrasons (2), comprenant un boîtier de transducteur (3) et comprenant un élément transducteur (4), le boîtier de transducteur (3) présentant une fenêtre à ultrasons (5) et l'élément transducteur (4) étant disposé dans le boîtier de transducteur (3) et étant conçu pour émettre des signaux ultrasonores (6) sur un trajet de signal (7) et pour recevoir des signaux ultrasonores (6) en provenance du trajet de signal (7), et comprenant une unité de commande et d'évaluation (8) pour commander l'élément transducteur (3) et évaluer les signaux ultrasonores (6), un élément tampon (9) étant disposé dans ou sur le boîtier de transducteur (3) dans le trajet de signal (7), l'élément tampon (9) formant au moins une couche limite (10) au moins partiellement réfléchissante dans le trajet de signal (7),
dans l'état de fonctionnement du transducteur à ultrasons (1), l'élément transducteur (4) émettant un signal ultrasonore (6), le signal ultrasonore (6) étant réfléchi au moins partiellement au niveau de la couche limite (10) de l'élément tampon (9), la composante de signal réfléchie (11) étant reçue par l'élément transducteur (4),
et l'unité de commande et d'évaluation (8) étant configurée de telle sorte que, dans l'état de fonctionnement du transducteur à ultrasons (1), elle surveille la réception de la composante de signal réfléchie (11) et, lors de la non-réception d'une composante de signal réfléchie (11), elle détecte un état de défaut du transducteur à ultrasons (1),
**caractérisé**
**en ce que** l'élément tampon (9) est formé par la fenêtre à ultrasons (5), et en ce que la fenêtre à ultrasons (5) présente une épaisseur accrue, l'épaisseur étant définie comme étant l'étendue de la fenêtre à ultrasons (5) le long du trajet de signal (7) du signal ultrasonore (6), et en ce que l'élément tampon (9) formé par la fenêtre à ultrasons (5) fait saillie dans le boîtier de transducteur (3) ou fait saillie hors du boîtier de transducteur (3).

2. Transducteur à ultrasons (1) pour débitmètre à ultrasons (2), comprenant un boîtier de transducteur (3) et comprenant un élément transducteur (4), le boîtier de transducteur (3) présentant une fenêtre à ultrasons (5) et l'élément transducteur (4) étant disposé dans le boîtier de transducteur (3) et étant conçu pour transmettre des signaux ultrasonores (6) sur un trajet de signal (7) et pour recevoir des signaux ultrasonores (6) en provenance du trajet de signal (7), et comprenant une unité de commande et d'évaluation (8) pour commander l'élément transducteur (3) et évaluer les signaux ultrasonores (6), un élément tampon (9) étant disposé dans ou sur le boîtier de transducteur (3) dans le trajet de signal (7), de sorte que l'élément tampon (9) forme au moins une couche limite (10) au moins partiellement réfléchissante dans le trajet de signal (7),
un second élément transducteur (4') étant disposé dans le boîtier de transducteur (3),
dans l'état de fonctionnement du transducteur à ultrasons (1), l'élément transducteur (4) émettant un signal ultrasonore (6), le signal ultrasonore (6) étant réfléchi au moins partiellement au niveau de la couche limite (10) de l'élément tampon (9), le second élément transducteur (4') étant disposé dans le boîtier de transducteur, de telle sorte que la composante de signal réfléchie (11) soit reçue par le second élément transducteur (4'),
et l'unité de commande et d'évaluation (8) étant configurée de telle sorte que, dans l'état de fonctionnement du transducteur à ultrasons (1), elle surveille la réception de la composante de signal réfléchie (11) et, lors de la non-réception d'une composante de signal réfléchie (11), elle détecte un état de défaut du transducteur à ultrasons (1),
**caractérisé**
**en ce que** l'élément tampon (9) est formé par la fenêtre à ultrasons (5), et en ce que la fenêtre à ultrasons (5) présente une épaisseur accrue, l'épaisseur étant définie comme étant l'étendue de la fenêtre à ultrasons (5) le long du trajet de signal (7) du signal ultrasonore (6), et en ce que l'élément tampon (9) formé par la fenêtre à ultrasons (5) fait saillie dans le boîtier de transducteur (3) ou fait saillie hors du boîtier de transducteur (3).

3. Transducteur à ultrasons (1) selon la revendication 1 ou 2, **caractérisé en ce que** l'élément tampon (9) forme au moins une seconde couche limite (10') au moins partiellement réfléchissante dans le trajet de signal (7), la composante de signal réfléchie (11), dans l'état de fonctionnement du transducteur à ultrasons (1), étant réfléchie sur la première couche limite (10) vers la seconde couche limite (10').

4. Transducteur à ultrasons (1) selon l'une des revendications 1 à 3, **caractérisé en ce qu'**un revêtement (13) améliorant la réflexion partielle est appliqué sur la couche limite (10) formée par l'élément tampon (9) ou, dans le cas de plusieurs couches limites (10, 10'), sur au moins l'une des couches limites (10, 10').

5. Transducteur à ultrasons (1) selon l'une des revendications 1 à 4, **caractérisé en ce que** l'unité de commande et d'évaluation (8) est configurée de telle sorte que, dans l'état de fonctionnement du transducteur à ultrasons (1), elle compare une grandeur décrivant la composante de signal réfléchie (11), en particulier l'intensité de la composante de signal réfléchie, à une valeur de référence et émet un signal d'erreur en cas d'écart supérieur à une plage de tolérance prédéfinie.

6. Débitmètre à ultrasons (2) pour déterminer le débit d'un milieu en écoulement, comprenant un premier transducteur à ultrasons (1) et un second transducteur à ultrasons (1) et une unité de commande et d'évaluation (14), les transducteurs à ultrasons (1) étant conçus pour émettre un signal ultrasonore (6) sur un trajet de signal (7) et/ou pour recevoir un signal ultrasonore (6) en provenance du trajet de signal (7) et étant reliés entre eux de manière fonctionnelle par l'intermédiaire du trajet de signal (7) du signal ultrasonore (6), **caractérisé**
**en ce qu'**au moins le transducteur à ultrasons (1) conçu pour l'émission comporte un élément tampon (9), en ce que l'élément tampon (9) est disposé dans ou sur le boîtier de transducteur (3) dans le trajet de signal (7) du signal ultrasonore (6), en ce que l'élément tampon (9) forme au moins une couche limite (10) au moins partiellement réfléchissante dans le trajet de signal (7), en ce que l'élément tampon (9) est formé par la fenêtre à ultrasons (5), et en ce que la fenêtre à ultrasons (5) présente une épaisseur accrue, l'épaisseur étant définie comme étant l'étendue de la fenêtre à ultrasons (5) le long du trajet de signal (7) du signal ultrasonore (6), et en ce que l'élément tampon (9) formé par la fenêtre à ultrasons (5) fait saillie dans le boîtier de transducteur (3) ou fait saillie hors du boîtier de transducteur (3), en ce que, dans l'état de fonctionnement du débitmètre à ultrasons (2), l'élément transducteur (4) du transducteur à ultrasons (1) émetteur émet un signal ultrasonore (6), le signal ultrasonore (6) étant au moins partiellement réfléchi et partiellement transmis au niveau de la couche limite (10) de l'élément tampon (9),
**en ce que**, soit
• la composante de signal réfléchie (11) est reçue par l'élément transducteur (4) du transducteur à ultrasons (1) émetteur et la composante de signal transmise (12) est reçue par l'élément transducteur (4) du transducteur à ultrasons (1) récepteur,
soit
• un second élément transducteur (4') est disposé dans le boîtier de transducteur à ultrasons (1) conçu pour l'émission, et en ce que la composante de signal réfléchie (11) est reçue par le second élément transducteur (4') du transducteur à ultrasons (1) émetteur et la composante de signal transmise (12) est reçue par l'élément transducteur (4) du transducteur à ultrasons (1) récepteur,
et **en ce que** l'unité de commande et d'évaluation (14) est configurée de telle sorte que, dans l'état de fonctionnement du débitmètre à ultrasons (2), elle surveille la réception de la composante de signal réfléchie (11) et la réception de la composante de signal transmise (12), et détecte et signale l'un des états de fonctionnement suivants du débitmètre à ultrasons (2) :
• lors de la réception de la composante de signal réfléchie (11) et de la composante de signal transmise (12) : débitmètre à ultrasons (1) fonctionnel,
• lors de la réception de la composante de signal réfléchie (11) et de la non-réception de la composante de signal transmise (12) : tube de mesure (15) vide,
• lors de la non-réception de la composante de signal réfléchie (11) et de la non-réception de la composante de signal transmise (12) : débitmètre à ultrasons (2) en état de défaut, en particulier élément transducteur (4) du transducteur à ultrasons (1) émetteur en état de défaut.

7. Débitmètre à ultrasons (2) selon la revendication 6, **caractérisé en ce qu'**au moins un transducteur à ultrasons (1) est conçu selon les caractéristiques de l'une des revendications 1 à 5.

8. Débitmètre à ultrasons (2) selon la revendication 6 ou 7, **caractérisé en ce que** l'unité de commande et d'évaluation (14) est configurée de telle sorte qu'elle évalue la composante de signal transmise (12) comme étant "non reçue" lorsque la composante de signal transmise (12) se situe en dessous d'une valeur limite prédéfinie.

9. Procédé (200) pour faire fonctionner un débitmètre à ultrasons, dans lequel le débitmètre à ultrasons comporte un premier transducteur à ultrasons, un second transducteur à ultrasons et une unité de commande et d'évaluation, les transducteurs à ultrasons étant conçus pour émettre un signal ultrasonore sur un trajet de signal et/ou pour recevoir un signal ultrasonore en provenance du trajet de signal et étant reliés fonctionnellement entre eux par l'intermédiaire du trajet de signal du signal ultrasonore, au moins le transducteur à ultrasons conçu pour l'émission présentant un élément tampon, l'élément tampon étant disposé dans ou sur le boîtier de transducteur dans le trajet de signal du signal ultrasonore et l'élément tampon formant au moins une couche limite au moins partiellement réfléchissante dans le trajet de signal, l'élément tampon (9) étant formé par la fenêtre à ultrasons (5), et la fenêtre à ultrasons (5) présentant une épaisseur accrue, l'épaisseur étant définie comme étant l'étendue de la fenêtre à ultrasons (5) le long du trajet de signal (7) du signal ultrasonore (6), et l'élément tampon (9) formé par la fenêtre à ultrasons (5) faisant saillie dans le boîtier de transducteur (3) ou faisant saillie hors du boîtier de transducteur (3),
lors d'une étape d'émission (201), l'élément transducteur émetteur émet un signal ultrasonore, le signal ultrasonore étant au moins partiellement réfléchi et partiellement transmis au niveau de la couche limite de l'élément tampon,
lors d'une étape de réception (202), l'élément transducteur du transducteur à ultrasons émetteur ou un second élément transducteur disposé dans le transducteur à ultrasons émetteur recevant la composante de signal réfléchie et l'élément transducteur du transducteur à ultrasons récepteur recevant la composante de signal transmise,
lors d'une étape de surveillance (203), l'unité de commande et d'évaluation surveillant la réception de la composante de signal réfléchie et la réception de la composante de signal transmise, et
lors d'une étape de signalisation (204), l'un des états de fonctionnement suivants du débitmètre à ultrasons étant signalé par l'unité de commande et d'évaluation :
• lors de la réception de la composante de signal réfléchie et de la réception de la composante de signal transmise : débitmètre à ultrasons fonctionnel,
• lors de la réception de la composante de signal réfléchie et de la non-réception de la composante de signal transmise : tube de mesure vide,
• lors de la non-réception de la composante de signal réfléchie et de la non-réception de la composante de signal transmise : débitmètre à ultrasons en état de défaut, en particulier élément transducteur du transducteur à ultrasons émetteur en état de défaut.

10. Procédé (200) selon la revendication 9, **caractérisé en ce que** la composante de signal transmise est évaluée comme étant "non reçue" lorsque la composante de signal transmise se situe en dessous d'une valeur limite prédéfinie.
